Europäisches Patentamt

(19) European Patent Office

Office européen des brevets

(11) Publication number : **0 506 227 A1**

(12) **EUROPEAN PATENT APPLICATION**

(21) Application number : **92301375.9**

(22) Date of filing : **19.02.92**

(51) Int. Cl.⁵ : **C08G 63/189, B29C 45/00**

(30) Priority : **22.02.91 JP 48686/91**

(43) Date of publication of application :
**30.09.92 Bulletin 92/40**

(84) Designated Contracting States :
**DE FR GB IT NL**

(71) Applicant : **TEIJIN LIMITED**
**6-7, Minamihommachi 1-chome Chuo-ku**
**Osaka-shi, Osaka 541 (JP)**

(72) Inventor : **Shimotsuma, Sakae**
**124-60, Tomuro,**
**Atsugi-shi, Kanagawa 243 (JP)**
Inventor : **Suzuoka, Akihiro, San-manshion,**
**Aobadai Gaaden No. 511, 14-5, Enokigaoka,**
**Midori-ku, Yokohama-shi, Kanagawa 227 (JP)**
Inventor : **Hatayama, Toshio, Jyoifuruhaitsu**
**II-304,**
**2-11-11, Higashihashimoto,**
**Sagamihara-shi, Kanagawa 229 (JP)**
Inventor : **Sasaki, Mie,**
**Arukadia Sagamihara 206, 5-10, Hikawa-cho,**
**Sagamihara-shi, Kanagawa 229 (JP)**

(74) Representative : **Votier, Sidney David et al**
**CARPMAELS & RANSFORD 43, Bloomsbury**
**Square**
**London WC1A 2RA (GB)**

(54) **Thin moulded polyester article.**

(57) A thin molded article which is produced from an aromatic polyester composed of naphthalenedicarboxylic acid as a main acid component and 1,4-butanediol as a main glycol component and has a thin portion having a thickness of 2 mm or less.

EP 0 506 227 A1

Detailed Description of the Invention:

The present invention relates to a thin molded article having a thin portion of which the thickness is 2 mm or less. More specifically, it relates to a thin molded article produced from an aromatic polyester composed of a naphthalene-dicarboxylic acid as a main acid component and 1,4-butanediol as a main glycol component.

Aromatic polyesters typified by polyethylene terephthalate (to be abbreviated as "PET" hereinafter) and polybutylene terephthalate (to be abbreviated as "PBT" hereinafter) are widely used in electric and electronic parts, home lighting appliance parts, automotive parts and machine parts due to their excellence in mechanical strength, electrical insulation performance and chemical resistance. As a raw material for these parts, general-purpose plastics such as polypropylene and thermosetting resins such as a phenolic resin have been conventionally used. With an increasing demand for higher functions, higher performances or improved moldability, these raw materials are being replaced by PET or PBT compositions.

The raw materials are being optimized as described above, and with a recent improvement in functions of parts, the size and thickness of molded articles are decreasing. There is therefore an increasing demand for strength, flowability and dimensional stability in thin molded articles in addition to properties conventionally required of resin compositions.

In a molded article produced from an aromatic polyester composed of terephthalic acid and aliphatic diol such as PET or PBT, presently known data shows that the strength per a unit cross-sectional area (e.g., tensile strength) is nearly constant regardless of a molded article thickness. As a result, when a molded article is thin, the absolute value of the strength decreases in proportion to a decrease in the thickness of a molded article.

It is an object of the present invention to provide a thin molded article.

It is another object of the present invention to provide a thin molded article having a small-thickness portion, which is improved in mechanical strength.

It is further another object of the present invention to provide a thin molded article having excellent mechanical strength, which is produced from an aromatic polymer composed of naphthalenedicarboxylic acid as a main acid component and 1,4-butanediol as a main glycol component.

The above objects and advantages and other objects and advantages of the present invention will be apparent from the following description.

According to the present invention, the above objects and advantages of the present invention are achieved by a thin molded article which is produced from an aromatic polyester composed of naphthalenedicarboxylic acid as a main acid component and 1,4-butanediol as a main glycol component and has a thin portion having a thickness of 2 mm or less.

The aromatic polyester used in the present invention is composed of naphthalenedicarboxylic acid as a main acid component and 1,4-butanediol as a main glycol component as described above. An aromatic polyester in which butylene naphthalate preferably makes up at least 90 mole percent of its recurring unit, more preferably at least 95 to 100 mole percent of its recurring unit, is advantageously used. Examples of the naphthalenedicarboxylic acid preferably include 2,6-naphthalenedicarboxylic acid, 2,7-naphthalenedicarboxylic acid, etc. In particular, an aromatic polyester comprising 2,6-naphthalenedicarboxylic acid as a naphthalenedicarboxylic acid component is preferred.

The aromatic polyester used in the present invention may contain a polymer unit derived from the following acid component, oxycarboxylic acid component and a polyol component such as a glycol in such an amount that does not impair the properties of the aromatic polyester, for example, not more than 10 mol% of the entire recurring unit.

Examples of the above acid component include aromatic dicarboxylic acids other than naphthalenedicarboxylic acid, such as phthalic acid, isophthalic acid, terephthalic acid, diphenyldicarboxylic acid, diphenyletherdicarboxylic acid, diphenoxyethanedicarboxylic acid, diphenylmethanedicarboxylic acid, diphenylketonedicarboxylic acid, diphenylsulfidedicarboxylic acid and diphenylsulfonedicarboxylic acid; aliphatic dicarboxylic acids such as succinic acid, adipic acid and sebacic acid; and alicyclic dicarboxylic acids such as cyclohexanedicarboxylic acid, tetralindicarboxylic acid and decalindicarboxylic acid.

Examples of the above glycol component, excluding 1,4-butanediol, include ethylene glycol, propylene glycol, trimethylene glycol, pentamethylene glycol, hexamethylene glycol, octamethylene glycol, neopentyl glycol, cyclohexanedimethanol, xylylene glycol, diethylene glycol, polyethylene glycol, bisphenol A, catechol, resorcinol, hydroquinone, dihydroxydiphenyl, dihydroxydiphenyl ether, dihyroxydiphenylmethane, dihydroxydiphenyl ketone, dihydroxydiphenylsulfide and dihydroxydiphenylsulfone.

Examples of the oxycarboxylic acid component include oxybenzoic acid, hydroxynaphthoic acid, hydroxydiphenylcarboxylic acid and ω-hydroxycaproic acid.

Further, the aromatic polyester may contain a polymer unit derived from compounds having three or more functional groups such as glycerin, trimethylol propane, pentaerythritol, trimellitic acid and pyromellitic acid in such an amount that the polyester does not lose its substantial moldability.

The aromatic polyester can be produced by polycondensing a raw material composed mainly of the naphthalenedicarboxylic acid and/or its functional derivative and 1,4-butanediol and/or its functional derivative according to a conventional process for the production of aromatic polyesters.

For the purpose of imparting the aromatic polyester with desired properties as required, a variety of additives such as a fibrous filler, a powdery filler, a particulate filler, a plate-like filler. a flame retardant, a flame retardant aid, a stabilizer, a colorant, an ultraviolet light absorber, a mold-releasing agent, an antistatic agent, a crystallization promoter, a nucleating agent and an impact resistance improver may be incorporated into the aromatic polyester in such an amount that does not impair the physical properties of the aromatic polyester.

Examples of the fibrous filler include inorganic fibrous substances such as glass fibers, carbon fibers, silica fibers, silica-alumina fibers, zirconia fibers, boron nitride fibers, silicon nitride fibers, boron fibers, potassium titanate fibers and fibrous substances of metals such as stainless steel, aluminum, titanium, copper and brass; and organic fibers such as aramid fibers, PEEK fibers, PPS fibers and wholly aromatic polyarylate fibers. Typical examples of the fibrous filler are glass fibers and carbon fibers.

Examples of the powdery and particulate fillers include carbon black, silica, powdered quartz, glass beads, glass powder; silicates such as calcium silicate, kaolin, talc, clay, diatomaceous earth and wollastonite, metal oxides such as iron oxide, titanium oxide, zinc oxide and alumina, metal carbonates such as calcium carbonate and barium carbonate, silicon carbide, silicon nitride, boron nitride and other metal powders.

Examples of the plate-like filler include mica, glass flakes and various metal foils.

The above fillers may be used alone or in combination. The combination of a fibrous filler, particularly glass fibers with particulate and/or plate-like filler(s) is preferred since the resultant molded article particularly has mechanical strength, dimensional accuracy and electrical properties in combination.

When the filler is used, it is desirable to use a binder or a surface treating agent as required. Examples of the binder include functional compounds such as an epoxy compound, a silane compound, an isocyanate compound and a titanate compound. These compounds may be preliminarily used for the surface treatment or binding of the filler, or may be incorporated at the time when the molding materials are prepared.

When the thin molded article is required to have flame retardancy, there may be incorporated bromine compounds, chlorine compounds, phosphorus compounds, etc. as the flame retardant. Of these, preferred are bromine compounds, and more preferred are a brominated epoxy flame retardant, a brominated polycarbonate flame retardant, a brominated polystyrene flame retardant and a brominated imide flame retardant. These flame retardants may be used alone or in combination.

For improvement of the flame retardancy effect, flame retardant aids such as $Sb_2O_3$ or $Sb_2O_5 \cdot nH_2O$ (n = 0 to 4) may be incorporated.

In the present invention, the total amount of the additives based on the total composition (molding materials) weight is preferably not more than 40 % by weight. When this amount exceeds 40 % by weight, the orientation of the aromatic polyester in the molded article is inhibited, and high strength with a small thickness cannot be achieved. For the same reason, the amount of the inorganic filler is preferably not more than 20 % by weight.

The composition containing various additives, used in the present invention, can be easily prepared with(by a known apparatus and a known method which are generally used for the preparation of conventional resin compositions. For example, the composition is prepared by any one of the following methods: (1) a method in which the components and additives are mixed together and the resultant mixture is melted, kneaded and extruded with an extruder to prepare pellets, (2) a method in which different groups of pellets having a different composition are first prepared and predetermined amounts of the different groups of pellets are mixed, and the mixture is molded to obtain a molded article having a desired composition and (3) a method in which one or two or more components are directly fed to a molding machine. Further, there may be employed a method in which part or some of the resin components is(are) milled into fine powders and mixed with other components. This method is preferable to mix the resin components homogeneously.

When the composition prepared from the above aromatic polyester as described above is molded into an article having a thin portion having a thickness of 2.0 mm or less, surprisingly, the strength (e.g., tensile strength) of the thin portion having a thickness of 2.0 mm or less per a unit cross-sectional area is remarkably higher than the strength of a portion having a thickness of more than 2.0 mm per the unit cross-sectional area. This phenomenon is not at all observed in any one of molded articles from conventional aromatic polyester compositions such as PET and PBT, and has not been inferable at all. Therefore, the molded article of the present invention has remarkably improved mechanical strength over any one of molded articles from conventional PET and PBT. The thickness of the thin portion is preferably 0.1 mm to 2.0 mm.

The molded article of the present invention can be produced, for example, by any one of an injection molding method, an extrusion method, a blow molding method, a vacuum forming method, an air-pressure forming method, a compression molding method and a transfer molding method. Of these methods, an injection molding method is most preferred.

The molded article having a thin portion, provided by the present invention, can be used as any one of electric and electronic parts such as a relay part, a connecter, a switch, a transformer and a coil bobbin; home lighting appliance parts such as a socket for a fluorescent lamp, a holder, a cover and a plug; automotive parts such as harness connecter and a lamp housing; and mechanical parts such as a gear, lever, a knob, a button, a case, a housing and a floppy shutter.

The present invention will be further described by reference to Examples.

The main properties described in Examples were measured as follows.

(1) Intrinsic viscosity

Measured in an o-chlorophenol at 35° C.

(2) Tensile strength

Measured according to ASTM D-638.

(3) Compressive strength

Measured with an auto-recording AG-5000A tester supplied by Shimadzu Corporation.

Example 1

Pellets of poly(1,4-butylenenaphthalenedicarboxylate) (to be referred to as "PBN" hereinafter) having an intrinsic viscosity of 1.02 was injection-molded to prepare a test piece having a thickness of 1 mm for a tensile test. The molding temperature was 270° C, and the mold temperature was 80° C. The tensile test piece was subjected to the tensile test. Table 1 shows the result.

Example 2

Example 1 was repeated except that the thickness of the test piece was changed to 1.5 mm Table 1 shows the result.

Comparative Example 1

Example 1 was repeated except that the thickness of the test piece was changed to 3 mm. Table 1 shows the result.

Comparative Example 2

Example 1 was repeated except that the pellets were replaced with pellets of PBT having an intrinsic viscosity of 1.08. Table 1 shows the result.

Comparative Example 3

Comparative Example 2 was repeated except that the thickness of the test piece was changed to 1.5 mm. Table 1 shows the result.

Comparative Example 4

Comparative Example 2 was repeated except that the thickness of the test piece was changed to 3 mm. Table 1 shows the result.

Table 1

| | Unit | Ex-1 | Ex-2 | CEx-1 | CEx-2 | CEx-3 | CEx-4 |
|---|---|---|---|---|---|---|---|
| Polymer | | PBN | PBN | PBN | PBT | PBT | PBT |
| Thickness | mm | 1.0 | 1.5 | 3.0 | 1.0 | 1.5 | 3.0 |
| Tensile strength | $kg/cm^2$ | 1,080 | 800 | 660 | 560 | 550 | 550 |

(In the above and subsequent Tables, Ex and CEx stand for Example and Comparative Example, respectively.)

Table 1 shows that the tensile strength of a molded article which is produced from PBN and has a thickness of not more than 2 mm is remarkably higher than any molded article having a thickness of more than 2 mm. That is, PBN shows high strength only when a molded article produced therefrom is thin. Further, as shown in Comparative Examples 2 to 4, this phenomenon is not at all observed when a molded article is produced from PBT. In a molded article having a thin portion, therefore, PBN can be said to give improved strength as compared with PBT.

Example 3

A brominated polycarbonate flame retardant in an amount of 10 % by weight based on the total weight of the resultant composition and an antimony trioxide in an amount of 5 % by weight on the same basis were added to pellets of PBN having an intrinsic viscosity of 1.02, and dry-blended. The dry blend was extruded with a single-screw extruder to prepare pellets. The pellets were injection-molded in the same manner as in Example 1, and the resultant test piece was tested in the same manner as in Example 1. Table 2 shows the result.

Comparative Example 5

Example 3 was repeated except that the thickness of the test piece was changed to 3 mm. Table 2 shows the result.

Comparative Example 6

Example 3 was repeated except that the pellets of PBN having an intrinsic viscosity of 1.02 were replaced with pellets of PBT having an intrinsic viscosity of 1.08. Table 2 shows the result.

Comparative Example 7

Comparative Example 6 was repeated except that the thickness of the test piece was changed to 3 mm. Table 2 shows the result.

Table 2

|  | Unit | Ex-3 | CEx-5 | CEx-6 | CEx-7 |
|---|---|---|---|---|---|
| Polymer |  | PBN | PBN | PBT | PBT |
| Thickness | mm | 1.0 | 3.0 | 1.0 | 3.0 |
| Tensile strength | $kg/cm^2$ | 790 | 620 | 370 | 550 |

Table 2 shows that the effect of the present invention is also produced by a molded article produced from a PBN composition containing a flame retardant and a flame retardant aid.

Example 4

Pellets of the same PBN composition as that used in Example 3 were injection-molded to prepare a box a width of 10 mm, a length of 17 mm, a depth of 15 mm and a thickness of 0.4 mm (a box of which top is open). This box was placed with its bottom top, and measured for a strength by a compression test. Table 3 shows the result.

Comparative Example 8

Example 4 was repeated except that the pellets of the PBN composition were replaced with the same pellets of the PBT composition as those used in Comparative Example 6. Table 3 shows the result.

Table 3

| | Unit | Ex-4 | CEx-8 |
|---|---|---|---|
| Polymer | | PBN | PBT |
| Thickness | mm | 0.4 | 0.4 |
| Compressive strength | kg | 2.8 | 1.9 |

Table 3 shows that a molded article having a thin portion having a thickness of not more than 2 mm, produced from a PBN composition, has a higher strength than that produced from a PBT composition, or produces the effect of the present invention.

**Claims**

1. A thin molded article which is produced from an aromatic polyester composed of naphthalenedicarboxylic acid as a main acid component and 1,4-butanediol as a main glycol component and has a thin portion having a thickness of 2 mm or less.

2. The thin molded article of Claim 1, wherein the aromatic polyester is composed of 2,6-naphthalenedicarboxylic acid as a main acid component and 1,4-butanediol as a main glycol component.

3. The thin molded article of Claim 1, wherein the thin portion has a thickness of 0.1 mm to 2.0 mm.

4. The thin molded article of Claim 1, which is produced by an injection molding method.

EP 0 506 227 A1

European Patent Office

**EUROPEAN SEARCH REPORT**

Application Number

EP 92 30 1375

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 459 402 (J.C. MORRIS et al.)<br>* Abstract; example 11; column 2, lines 58-63 * | 1-4 | C 08 G 63/189<br>B 29 C 45/00 |
| X | DE-A-2 428 126 (TEIJIN LTD)<br>* Claims 1,4,7-10; examples 2,3 * | 1-3 | |
| Y | | 1-4 | |
| Y | DE-A-2 051 232 (EASTMAN KODAK CO.)<br>* Claims 1,8; example 11; page 8, paragraph 2 * | 1-4 | |
| X | US-A-4 060 516 (TEIJIN LTD)<br>* Claim 1; example 28; column 4, lines 9-48 * | 1-3 | |
| X | RESEARCH DISCLOSURE, no. 283, November 1987, pages 720-727, disclosure no. 28360, New York, US; "Poly(ethylene 2,6-naphthalenedicarboxylate) copolymers containing 1,4-butanediol"<br>* Page 720, left-hand column; example 7 * | 1,2 | TECHNICAL FIELDS SEARCHED (Int. Cl.5)<br><br>C 08 G |

The present search report has been drawn up for all claims

| Place of search | Date of completion of the search | Examiner |
|---|---|---|
| THE HAGUE | 03-06-1992 | KRISCHE D.H.T. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

7